# EUROPÄISCHE PATENTSCHRIFT

(11) **EP 0 545 176 B1**
(45) Veröffentlichungstag und Bekanntmachung des Hinweises auf die Patenterteilung: **06.03.1996**
(21) Anmeldenummer: 92119791.9
(22) Anmeldetag: 20.11.1992
(51) Int. Cl.: C08L 67/06

(54) **Härtbare Formmassen auf Basis von ungesättigten Polyester**
Curable moulding compositions based on unsaturated polyesters
Masses à mouler durcissables à base de polyesters insaturés

(30) Priorität: 30.11.1991 DE 4139519
(43) Veröffentlichungstag der Anmeldung: 09.06.1993
(73) Patentinhaber: BASF Aktiengesellschaft, D-67063 Ludwigshafen (DE)
(72) Erfinder: Hesse, Anton, Dr., W-6940 Weinheim (DE); Buhl, Dieter, W-6710 Frankenthal (DE)

(56) Entgegenhaltungen:
- EP-A- 0 355 059
- CHEMICAL ABSTRACTS, vol. 86, no. 14, 4. April 1977, Columbus, Ohio, US; abstract no. 90994e, Seite 59
- DATABASE WPI Derwent Publications Ltd., London, GB; AN 74-65123V (37)
- CHEMICAL ABSTRACTS, vol. 99, no. 12, 19. September 1983, Columbus, Ohio, US; abstract no. 89110a, Seite 38
- DATABASE WPI Derwent Publications Ltd., London, GB; AN 77-89002Y (50)
- PATENT ABSTRACTS OF JAPAN vol. 6, no. 63 (C-99)(941) 22. April 1982
- CHEMICAL ABSTRACTS, vol. 79, no. 10, 10. September 1973, Columbus, Ohio, US; abstract no. 54399m, Seite 48 ;Spalte 2

## Beschreibung

Die Erfindung betrifft härtbare Formmassen mit vermindertem Polymerisationsschwund und geringer Monomeremission.

Zur Verminderung des Schrumpfens bei der Polymerisation und damit zur Verbesserung der Oberfläche setzt man Formmassen auf Basis von ungesättigten Polyester (UP)-Harzen thermoplastische Polymere, beispielsweise gesättigte Polyester zu. Derartige Niederschrumpfsysteme basieren vorwiegend auf styrolhaltigen UP-Harzen, die wegen der relativ hohen Flüchtigkeit des Monomeren beim Lagern an Luft erhebliche Styrolmengen emittieren. Die Styrolverluste im Halbzeug führen bei empfindlichen Niederschrumpfsystemen häufig zu Oberflächenmängeln im Formteil (Flecken, Farbinhomogenität). Zur Vermeidung von Geruchsbelästigungen bei der Verarbeitung und zur Einhaltung der vorgeschriebenen maximalen Arbeitsplatz-Konzentration von Styrol sind gelegentlich Absaugvorrichtungen notwendig. Deshalb war es ein Ziel der vorliegenden Erfindung, Niederschrumpfsysteme auf der Basis solcher Monomere bereitzustellen, die aufgrund eines niedrigen Dampfdrucks bei Raumtemperatur praktisch nicht flüchtig sind, so daß die oben geschilderten Probleme bei der Herstellung und Verarbeitung der Halbzeuge vermieden werden.

Zur Schrumpfkompensation von UP-Harzen werden üblicherweise Thermoplasten, wie Polyvinylacetat, Polymethylmethacrylat, Polystyrole oder die carboxylmodifizierten Derivate, in Form ihrer styrolischen Lösungen eingesetzt. Diese Polymerlösungen weisen eine relativ niedrige Viskosität auf, sind deshalb leicht handhabbar und liefern Niederschrumpfsysteme mit günstigem Tränkverhalten für Füllstoffe und Fasern. Beim Ersatz von Styrol durch schwerflüchtige Monomere, die stets polarer sind als Styrol, resultieren meist hochviskose Lösungen mit unzureichenden Tränkeigenschaften der Harz/Füllstoffpasten. Außerdem ist die Schrumpfkompensation bei gleichem Polymer in schwerflüchtigen Monomeren wesentlich schlechter ausgeprägt als in Formulierungen mit Styrol. Dies ist insbesondere dann der Fall, wenn man als Niederschrumpfkomponente übliche Polyester auf Basis von Ethylenglykol oder Diethylenglykol einsetzt. Die vorliegende Erfindung löst diese Probleme dadurch, daß als schrumpfmindernde Thermoplasten spezielle gesättigte Polyester und eine Monomerkombination aus Diallylphthalat und Hydroxyalkylmethacrylaten eingesetzt werden.

Zu den einzelnen Komponenten ist folgendes auszuführen:
A. UP-Harze
Bevorzugt sind übliche Veresterungsprodukte aus Dicarbonsäuren, bevorzugt Maleinsäure(anhydrid) und Fumarsäure einerseits und Diolen, wie Propylenglykol, Neopentylglykol oder Butandiol-1.3 andererseits, wobei eine hohe Doppelbindungskonzentration günstig ist. Auch der Einsatz Dicyclopentadien-modifizierter UP-Harze ist vorteilhaft.
B1. Diallylphthalat ist in den Formmasen in Mengen von 5 - 250, vorzugsweise von 10 - 100 Gew.-Teilen, bezogen auf A, enthalten.
B2. Hydroxyalkylmethacrylate

| | |
|---|---|
| Bevorzugt sind | 2-Hydroxyethylmethacrylat, |
| | 2-Hydroxypropylmethacrylat |
| und | 4-Hydroxybutylmethacylat. |

Die Hydroxyalkylmethacrylate sind in der Formmasse in Mengen von 5 - 100, vorzugsweise von 10 - 50 Gew.-Teilen, bezogen auf A, enthalten.
C. Gesättige Polyester
60 - 100 mol-% der eingesetzten Dicarbonsäuren bestehen aus Adipinsäure, der Rest können sein: Bernsteinsäure, Glutarsäure, Tetrahydrophthalsäure, Hexahydrophthalsäure, o-Phthalsäure, Isophthalsäure oder Terephthalsäure sowie Hydroxypivalinsäure und andere monofunktionelle Carbonsäuren in untergeordneten Mengen.
Die Diole bestehen zu 70 - 100 mol-% aus solchen mit Alkylverzweigung und einem Molekulargewicht < 130 g/Mol. Dazu zählen Propylenglykol, Butandiol-1.3, Neopentylglykol, 2-Methyl-2-ethylpropandiol-1.3 und Butandiol-2.3. Der Rest können andere Diole sein. z.B. Butandiol-1.4, Hexandiol-1,6, Ethylenglykol, Dipropylenglykol, hydriertes Bisphenol-A. Ein Teil davon kann durch monofunktionelle Hydroxyverbindungen ersetzt sein.
Die Säurezahlen bewegen sich zwischen 1 und 50, vorzugsweise zwischen 5 und 30; das mittlere Molekulargewicht (Zahlenmittel) liegt zwischen 800 - 15 000 und vorzugsweise zwischen 2000 und 8000.
D. Die Formmasse enthält 0 bis 30, vorzugsweise 0,5 bis 10 Gew.-Teile, bezogen auf A, eines üblichen Eindickmittels auf Basis einer basischen Metallverbindung. Bevorzugt sind dabei Oxide, Hydroxide, Alkoholate und Salze organischer Säuren von Metallen der 1. bis 3. Hauptgruppe, insbesondere MgO, Mg(OH)₂, CaO, Ca(OH)₂, BaO, Li₂O, LiOH, Mg- und Al-Alkoholate, Al-Ethylhexanoat und Al-Benzoat. Geeignet sind auch einige Übergangsmetallverbindungen, wie z.B. ZnO.
Wie bei ungesättigten Polyesterharzen bekannt, läßt sich auch hier die Eindickung durch Zusatz von polaren Verbindungen beschleunigen, z.B. durch Hydroxylverbindungen, wie Wasser, Propylenglykol, Glycerin, durch Carbonsäuren und deren Anhydride, wie Benzoesäure, Cyclohexancarbonsäure, Hexahydrophthalsäureanhydrid, sowie durch Halogenide, wie Cholinchlorid und Lithiumhalogenide.
E. Als Polymerisationsinitiatoren werden übliche, bei Temperaturen oberhalb von 50°C in Radikale zerfallende Peroxide eingesetzt. Ihre Halbwertzeit bei 50°C soll vorzugsweise größer als 100 h sein. In Frage kommen Diacylperoxide, Peroxydicarbonate, Peroxyester, Perketale, Ketonperoxide, Hydroperoxide und Dialkylperoxide. Beispielhaft seien genannt: Succinylperoxid, Diacetylperoxid, Benzoylperoxid, t-Butylperoktoat, p-Chlorbenzoylperoxid, t-Butylperisobutyrat, 3,5,5-Trimethylcyclohexanonperketal, 2,5-Dimethylhexan-2,5-diperbenzoat, t-Butylperacetat, t-Butylperisononanat, Di-t-butyl-diperphthalat, 2,2-Bis-(t-butylperoxy)-butan, t-Butylperbenzoat, Dicumylperoxid, 2,5-Dimethyl-2,5-bis-(t-butylperoxy)-hexan, t-Butylhydroperoxid, Cumolhydroperoxid, Di-t-butylperoxid, 2,5-Dimethyl-2,5-bis-(t-butylperoxy)-hexin, 1,1,4,4,7,7-Hexamethyl-cyclo-4,7-diperoxynonan, Diamylperoxid, t-Butylperethylhexanoat, Di-lauroylperoxid, t-Butylcumylperoxid, γ -t-Butylperoxyvalerolacton, Dimylristylperoxydicarbonat, Bis(4-t-butylcyclohexyl)-peroxydicarbonat. Auch CC-labile Verbindungen und Azoverbindungen sind geeignet. Nicht geeignet sind Initiatoren, die unterhalb von 50°C zerfallen. Sie verringern die Lagerstabilität und führen zu vorzeitiger Gelierung der Formmasse. Ein Beispiel für einen derartigen Initiator ist Acetylacetonperoxid. Die sogenannte kalthärtende Systeme haben ebenfalls eine zu geringe Lagerstabilität.
Die Polymerisationsinitiatoren werden in Mengen von 0,01 bis 10, vorzugsweise von 0,5 bis 3 Gew.-Teilen, bezogen auf A, zugesetzt.
F. Als Verstärkungsfasern können die bekannten anorganischen und organischen Fasern, z.B. aus Glas, Kohlenstoff, Cellulose, Polyethylen, Polycarbonsäureestern oder Polyamid eingesetzt werden. Sie können in Form von Kurzfasern mit einer Länge von bis zu 5 cm oder als gemahlene Fasern vorliegen, bevorzugt aber als Langfasern in Form von Einzelrovings, Bahnen aus prallelen Rovings, Fasermatten, Faservliese, Fasergewebe oder Fasergewirke.
Die Fasern werden in Mengen von 30 bis 500 Gew.-%, bezogen auf A, eingesetzt. Bei Glasfasermatten beträgt der besonders bevorzugte Glasgehalt 100 bis 300 Gew.-%, bezogen auf A, bei Rovings 30 bis 150 Gew.-% und bei unidirektionalen Fasergelegen 150 bis 400 Gew.-%.
Geeignete Füllstoffe sind z.B. übliche feinpulvrige oder körnige Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen. Ihr Gehalt beträgt vorzugsweise 10 bis 300 Gew.-%, bezogan auf A.
G. Als weitere Zusatzstoffe kommen die üblichen Inhibitoren, insbesondere Phenole, Chinone oder Nitrosoverbindungen, Gleitmittel, wie z.B. Wachse, Paraffine zur Vermeidung der Oberflächenverdunstung, sowie Flammschutzmittel und Formtrennmittel in Frage.

Ein bevorzugtes Verfahren zur Herstellung der erfindungsgemäßen Formmassen besteht darin, daß man die Komponenten A, B, C, E und F (mit Ausnahme von langen Verstärkungsfasern) vermischt, bei Temperaturen unterhalb von 50°C die Komponente D zusetzt und dadurch die Eindickung einleitet, gegebenenfalls die noch fließfähige Masse auf Verstärkungsfasern aufbringt und dann die Eindickung zu Ende führt. Zur Beschleunigung der Eindickung kann es in manchen Fällen zweckmäßig sein, die Masse kurzzeitig auf Temperaturen unterhalb von 100°C, vorzugsweise unterhalb von 50°C zu erwärmen. Die vollständige Eindickung der Masse ist vorzugsweise in wenigen Stunden praktisch beendet.

Die eingedickten Massen können längere Zeit bis zur Verarbeitung gelagert werden, wobei sie z.B. aufgewickelt gestapelt oder auch verpackt werden können. Zur Verarbeitung der Formmassen kommen das Pressen, Spritzpressen, Spritzgießen und Tiefziehen in Frage, wobei die Härtung bei Temperaturen oberhalb von 50°C, vorzugsweise zwischen 80 und 200°C und insbesondere zwischen 120 und 180°C durchgeführt werden.

Die in den Beispielen genannten Teile und Prozente beziehen sich auf das Gewicht.

### Ungesättigte Polyesterharze

### Harz 1

Ein ungesättigter Polyester mit Säurezahl 28 und Schmelzviskosität bei 150°C von 260[mPa.s] wurde hergestellt aus Maleinsäureanhydrid und Propylenglykol im Molverhältnis 1:1,25, 75%ig in Diallylphthalat gelöst und mit 200 ppm Methylhydrochinon stabilisiert.

### Harz 2

Ein ungesättigter Poylester mit Säurezahl 38 und Schmelzviskosität bei 125°C von 460[mPa·s] wurde in einem zweistufigen Verfahren hergestellt, bei dem im ersten Schritt äquimolare Mengen Dicyclopentadien, Maleinsäureanhydrid und Wasser zum Maleinsäurehalbester umgesetzt und im Folgeschritt mit Propylenglykol und Maleinsäureanhydrid bei 190°C kondensiert werden. Die Einsatzstoffe weisen ein Molverhältnis Maleinsäure, Dicyclopentadien und Propylenglykol wie 1:0,66:0,83 auf. Der ungesättigte Polyester wurde 75%ig in Diallylphthalat gelöst und mit 200 ppm Methylhydrochinon stabilisiert.

### Harz 3

Analog zu Harz 2 wurde in einem zweistufigen Verfahren ein ungesättigter Polyester mit Säurezahl 30 und Schmelzviskosität bei 150°C von 290[mPa·s] aus Maleinsäureanhydrid, Dicyclopentadien und Propylenglykol im Molverhältnis 1:0,5:0,87 hergestellt. Der Polyester wurde 75%ig in Diallylphthalat gelöst und mit 200 ppm Methylhydrochinon stabilisiert.

### Gesättigte Polyester

Die gesättigten Polyester wurden durch Kondensation der Einsatzstoffe (Dicarbonsäuren und Dihydroxyverbindungen) bei Temperaturen bis 220°C unter Stickstoff hergestellt, 75%ig in Diallylphthalat gelöst und mit 200 ppm Methylhydrochinon stabilisiert. In Tabelle 1 sind Aufbau, Säurezahl und Schmelzviskosität der gesättigten Polyester zusammengefaßt. Die Varianten 5 und 6 sind nicht erfindungsgemäß und dienen als Komponenten in Vergleichsbeispielen.

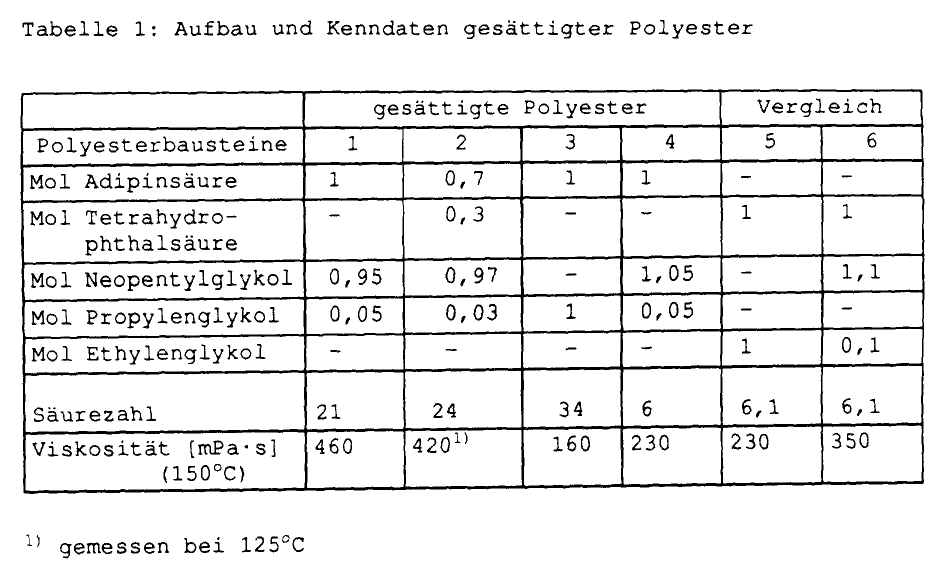

### Beispiele 1-5

Aus folgenden Einsatzstoffen wurde mit Hilfe eines Rührwerks eine fließfähige Paste zubereitet:

| | |
|---|---|
| 51 | Teile UP-Harz |
| 30 | Teile Polyesterlösung (75%ig) |
| 13 | Teile Diallylphthalat |
| 6 | Teile Hydroxyethylmethacrylat |
| 1,5 | Teile tert. Butylperbenzoat |
| 0,125 | Teile Co-Naphthenat (8%ig an Cobalt) |
| 150 | Teile Füllstoff Kreide (Millicarb®) |
| 3 | Teile Aerosil |

Die Paste wurde in einem Plattenwerkzeug (3x80x130 mm) zwischen Polyesterabdeckfolien 10 min bei 150°C unter einem Druck von 50 bar gehärtet. Nach dem Entformen wurden die Oberflächen der Platten hinsichtlich Glanz und Farbhelligkeit geprüft. Die Ergebnisse in Tabelle 2 zeigen, daß die erfindungsgemäßen Formstoffe einen hohen Oberflächenglanz aufweisen und aufgrund der Schrumpfkompensation durch Bildung von Mikrohohlräumen hellweiß gefärbt sind. Die Formstoffe der Vergleichsbeispiele haben dagegen matte Oberflächen und sind beige gefärbt als Folge fehlender Schrumpfkompensation.

**Tabelle 2**

| Schrumpfkompensation von Harzpasten | | | | |
|---|---|---|---|---|
| Beispiel | UP-Harz | gesättigte Polyester-Lsg. | Formstoffoberfläche | |
| | | | Farbe | Glanz |
| 1 | 1 | 1 | weiß | hoch |
| 2 | 1 | 2 | weiß | hoch |
| 3 | 2 | 4 | weiß | hoch |
| 4 | 3 | 3 | weiß | hoch |
| 5 | 3 | 1 | weiß | hoch |
| Vergleich | 1 | 5 | beige | matt |
| Vergleich | 2 | 6 | beige | matt |

### Beispiel 6

Auf folgenden Einsatzstoffen wurde mit Hilfe eines Rührwerks eine fließfähige Paste hergestellt und auf einer SMC-Technikumsanlage mit Glasfasern zu einem Halbzeug verarbeitet:

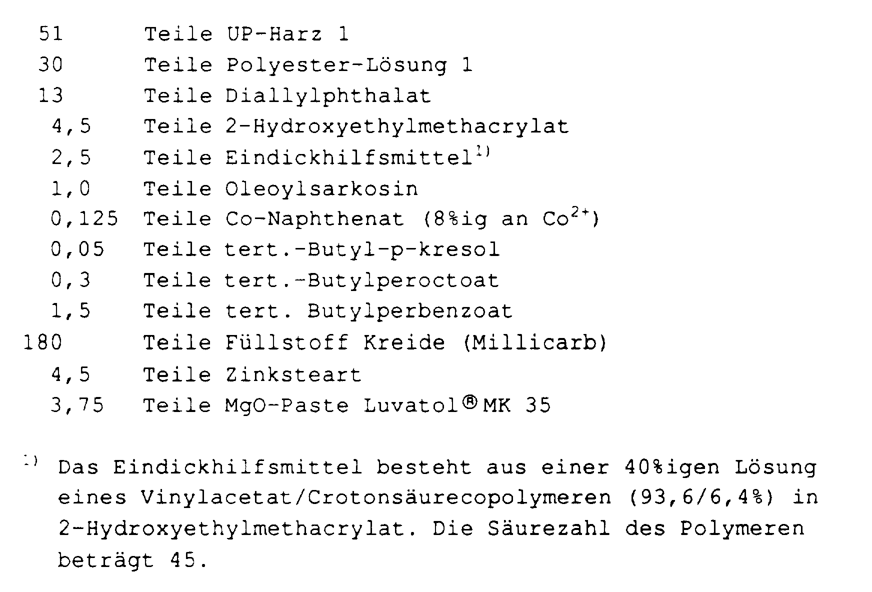

Der Glasfasergehalt betrug 28 % (Schnittrovings, 2,5 cm). Die Formmasse wurde zwischen Polyethylenfolien bei 23°C 7 Tage gelagert und nach Entfernen der Abdeckfolien in einem Plattenwerkzeug (0,4x58x25 cm) 10 min bei 145°C und 80 bar verpreßt.

Es resultierte ein Formstoff mit glatter, glänzender Oberfläche vergleichbar mit styrolhaltigen LP-Systemen des Marktes.

Wurde zum Vergleich in der obigen SMC-Rezeptur die gesättigte Polyester-Komponente 1 durch die nicht erfindungsgemäße Komponente 5 ersetzt, resultierte eine Formstoffplatte mit matter, welliger Oberfläche, die zudem Schrumpfmarken aufwies und deutliche Faserstrukturen erkennen ließ.

## Patentansprüche

1. Härtbare Formmassen, enthaltend
A. 100 Gew.-Teile eines ungesättigten Polyesters,
B. copolymerisierbare Monomere,
C. 25 - 75 Gew.-Teile eines gesättigten Polyesters,
D. 0 - 30 Gew.-Teile eines Eindickmittels,
E. 0,01-10 Gew.-Teile eines Peroxids, mit einer Halbwertszeit bei 50°C von mehr als 100 Stunden,
F. 30 - 500 Gew.-Teile Verstärkungsfasern und/oder Füllstoffe,
G. gegebenenfalls weitere Zusatzstoffe,
wobei der Polyester C aus folgenden Molekülbausteinen aufgebaut ist:
60 - 100 mol-% Adipinsäure
40 - 0 mol-% andere gesättigte Dicarbonsäuren,
und
70 - 100 mol-% eines alkylverzweigten, gesättigten Diols mit einem Molekulargewicht unter 130 g/mol,
30 - 0 mol-% eines anderen gesättigten Diols,
dadurch gekennzeichnet, daß die Formmasse als copolymerisierbare Monomere
B1 5 - 250 Gew.-Teile Diallylphthalat und
B2 5 - 100 Gew.-Teile eines Hydroxyalkylmethacrylats enthält.

2. Härtbare Formmasse nach Anspruch 1, dadurch gekennzeichnet, daß das alkylverzweigte Diol Neopentylglykol ist.

3. Fertigteile, hergestellt aus den Formmassen nach Anspruch 1, durch Härtung bei Temperaturen oberhalb von 50°C.

## Claims

1. A curable moulding composition comprising
A. 100 parts by weight of an unsaturated polyester,
B. copolymerizable monomers,
C 25-75 parts by weight of a saturated polyester,
D. 0-30 parts by weight of a thickener,
E. 0.01-10 parts by weight of a peroxide having a half-value period at 50°C of greater than 100 hours,
F. 30-500 parts by weight of reinforcing fibers and/or fillers,
G. if desired further additives,
where the polyester C is built up from the following molecular units:
60 - 100 mol% of adipic acid
40 - 0 mol% of other saturated dicarboxylic acids, and
70 - 100 mol% of an alkyl-branched, saturated diol having a molecular weight of less than 130 g/mol,
30 - 0 mol% of another saturated diol,
wherein the copolymerizable monomers are
B1 5 - 250 parts by weight of diallyl phthalate and
B2 5 - 100 parts by weight of a hydroxyalkyl methacrylate.

2. A curable molding composition as claimed in claim 1, wherein the alkyl-branched diol is neopentyl glycol.

3. A finished part produced from a moulding composition as claimed in claim 1 by curing at above 50°C.

## Revendications

1. Matières à mouler durcissables, contenant
A. 100 parties en poids d'un polyester insaturé
B. des monomères copolymérisables
C. 25-75 parties en poids d'un polyester saturé
D. 0-30 parties en poids d'un agent d'épaississement
E. 0,01-10 parties en poids d'un peroxyde d'une période, à 50°C, supérieure à 100 heures
F. 30-500 parties en poids de fibres de renforcement et/ou de charges
G. éventuellement d'autres additifs,
le polyester C étant constitué des éléments moléculaires suivants :
60-100 moles % d'acide adipique
40-0 moles % d'autre d'acides dicarboxyliques saturés
et
70-100 moles % d'un diol saturé à ramification alkyle et d'un poids moléculaire inférieur à 130 g/mole
30-0 moles % d'un autre diol saturé
caractérisé par le fait que la matière à mouler contient
B1 5-250 parties en poids de phtalate de diallyle et
B2 5-100 parties en poids d'un hydroxyalkylméthacrylate.

2. Matières à mouler selon la revendication 1, caractérisées par le fait que le diol à ramification alkyle est du néopentylglycol.

3. Pièces finies, fabriquées à partir des matières à mouler selon la revendication 1 par durcissement à des températures supérieures à 50°C.
